(19) Europäisches Patentamt / European Patent Office / Office européen des brevets

(11) **EP 3 299 862 A1**

(12) **EUROPEAN PATENT APPLICATION**

(43) Date of publication:
**28.03.2018 Bulletin 2018/13**

(51) Int Cl.:
*G02B 21/36* (2006.01)　　*G06T 3/40* (2006.01)
*G06T 7/20* (2017.01)　　*G06T 11/60* (2006.01)
*H04N 5/232* (2006.01)　　*G06K 9/20* (2006.01)

(21) Application number: **17168330.3**

(22) Date of filing: **27.04.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.09.2016 JP 2016187018**

(71) Applicant: **Olympus Corporation**
**Tokyo 192-8507 (JP)**

(72) Inventor: **NAKATSUKA, Masayuki**
**Tokyo, 192-8507 (JP)**

(74) Representative: **Gunzelmann, Rainer**
**Wuesthoff & Wuesthoff**
**Patentanwälte PartG mbB**
**Schweigerstraße 2**
**81541 München (DE)**

(54) **MICROSCOPE IMAGING SYSTEM**

(57) A wide-field-angle overlapped image and a currently-observed visual field range can be simultaneously ascertained without using an electrically-driven stage or an encoder-equipped stage. Provided is a microscope imaging system (1) including: a stage (5) on which a sample (X) is placed and that is movable in a direction intersecting an observation optical axis; an imaging unit (6) that acquires an image of the sample (X) placed on the stage (5) at time intervals; a motion vector calculating unit (9) that calculates a motion vector between two images acquired by the imaging unit (6); and an image generating unit (10) that generates an overlapped image by overlapping the image acquired by the imaging unit (6) with a current position where the motion vector is cumulatively added, and that also generates a composite image by combining display of the current position with the overlapped image.

FIG. 4

EP 3 299 862 A1

## Description

{Technical Field}

The present invention relates to microscope imaging systems.

{Background Art}

When observing a sample by using a microscope, the visual field that can be observed at one time is mainly determined by the magnifying power of an objective lens. As the magnifying power of the objective lens increases, the sample can be observed more finely, but the observation range becomes smaller.

For the purpose of, for example, preventing an observation site of the sample from being overlooked, it is demanded that the entire image of the sample and the currently-observed visual field range be ascertained simultaneously. A known microscope imaging system, that is, a so-called virtual slide system, is equipped with an electrically-driven stage or an encoder-equipped stage and generates a wide-field-angle overlapped image by overlapping a plurality of still images acquired while shifting the visual field of the sample (for example, see Patent Literatures 1 and 2).

By using positional information instructed to the electrically-driven stage or positional information detected by the encoder of the encoder-equipped stage, this microscope imaging system can display the currently-observed visual field range over the entire image of the sample according to the wide-field-angle overlapped image.

{Citation List}

{Patent Literature}

    {PTL 1} Japanese Unexamined Patent Application, Publication No. 2009-14939
    {PTL 2} Japanese Unexamined Patent Application, Publication No. 2010-134374

{Summary of Invention}

{Technical Problem}

However, the microscope imaging system according to Patent Literature 1 or 2 has a large-scale configuration since it uses the positional information instructed to the electrically-driven stage or the positional information detected by the encoder equipped in the stage and is thus problematic in terms of high cost. On the other hand, a microscope having a manually-driven stage is problematic in that a position detector, such as an encoder, which detects the current position of the stage, needs to be added.

The present invention has been made in view of the circumstances described above, and an object thereof is to provide a microscope imaging system with which a wide-field-angle overlapped image and a currently-observed visual field range can be simultaneously ascertained without using an electrically-driven stage or an encoder-equipped stage.

{Solution to Problem}

In order to achieve the aforementioned object, the present invention provides the following solutions.

According to an aspect of the present invention, a microscope imaging system includes: a stage on which a sample is placed and that is movable in a direction intersecting an observation optical axis; an imaging unit that acquires an image of the sample placed on the stage at time intervals; a motion vector calculating unit that calculates a motion vector between two images acquired by the imaging unit; and an image generating unit that generates an overlapped image by overlapping the image acquired by the imaging unit with a current position where the motion vector is cumulatively added, and that also generates a composite image by combining display of the current position with the overlapped image.

According to this aspect, by placing the sample on the stage and using the imaging unit to acquire the image of the sample at time intervals while using the stage to move the sample in the direction orthogonal to the observation optical axis, a motion vector between two acquired images is calculated by the motion vector calculating unit every time two images are acquired. Then, by cumulatively adding the calculated motion vector, the current position is determined. The image generating unit subsequently generates an overlapped image by overlapping the acquired image with the determined current position, and also generates a composite image by combining the display of the current position with the overlapped image.

Accordingly, the current position of the stage can be calculated on the basis of the image acquired by the imaging unit without using an electrically-driven stage or an encoder-equipped stage. Therefore, even with a manually-driven stage, a large-scale device for detecting the position is not necessary, and a wider-range sample image and a currently-observed visual field range can be simultaneously ascertained in accordance with the overlapped image combined with the display of the current position.

In the above aspect, the motion vector calculating unit may calculate a reliability of the calculated motion vector, and the microscope imaging system may further include a control unit that controls the image generating unit to generate the overlapped image and the composite image if the calculated reliability exceeds a predetermined threshold value.

Accordingly, if the reliability of the motion vector is low, such as when the motion vector is not accurately calculated due to a large movement of the stage while two images are being acquired, it is not possible to accurately generate the overlapped image or calculate the current position. Therefore, the control unit causes the image generating unit to generate an overlapped image and a composite image only when the reliability of the motion vector is high, thereby enabling more accurate observation.

Furthermore, in the above aspect, the microscope imaging system may further include a position searching unit that searches for a position of the image acquired by the imaging unit in the overlapped image generated by the image generating unit. If the calculated reliability of the motion vector is smaller than or equal to the threshold value, the control unit may stop the generating processes of the overlapped image and the composite image and may cause the position searching unit to start searching. When the position of the image is detected by the position searching unit, the control unit may control the image generating unit to resume the generating processes of the overlapped image and the composite image using the detected position of the image as the current position.

Accordingly, if the reliability of the motion vector is low and the current position is lost, the generating processes of the overlapped image and the composite image based on an inaccurate current position are stopped. Then, the position searching unit searches for the position of the acquired image in the previously-generated overlapped image. Subsequently, the generating process of the overlapped image, the calculating process of the current position, and the generating process of the composite image are performed using the detected position of the image as the proper current position, thereby enabling more accurate observation.

Furthermore, in the above aspect, the position searching unit may calculate a reliability of the detected position of the image. If the calculated reliability exceeds a predetermined threshold value, the control unit may control the image generating unit to resume the generating processes of the overlapped image and the composite image using the detected position of the image as the current position.

Accordingly, the generating processes of the overlapped image and the composite image are resumed only if a proper current position is detected in the searching process of the current position performed by the position searching unit, thereby enabling more accurate observation.

Furthermore, in the above aspect, the microscope imaging system may further include a magnifying-power acquiring unit that acquires an optical magnifying power on the observation optical axis and an image scale unit that adjusts a size of the image acquired by the imaging unit in accordance with the optical magnifying power acquired by the magnifying-power acquiring unit. The image generating unit may generate the overlapped image and the composite image by using the image adjusted by the image scale unit.

Accordingly, even when the visual field changes as a result of a change in the optical magnifying power on the observation optical axis due to, for example, replacement of the observation lens, the image scale unit adjusts the size of the image in accordance with the optical magnifying power acquired by the magnifying-power acquiring unit, so that the generating process of the overlapped image, the calculating process of the motion vector, and the generating process of the composite image can be performed by using the image adjusted to the proper size.

Furthermore, in the above aspect, the microscope imaging system may further include a magnifying-power acquiring unit that acquires an optical magnifying power on the observation optical axis and an image scale unit that adjusts a size of the image acquired by the imaging unit in accordance with the optical magnifying power acquired by the magnifying-power acquiring unit. The position searching unit may search for the position by using the image adjusted by the image scale unit.

Accordingly, even when the visual field changes as a result of a change in the optical magnifying power on the observation optical axis due to, for example, replacement of the observation lens, the image scale unit adjusts the size of the image in accordance with the optical magnifying power acquired by the magnifying-power acquiring unit, so that it is possible to accurately search for the current position by using the image adjusted to the proper size.

{Advantageous Effects of Invention}

The present invention is advantageous in that a wide-field-angle overlapped image and a currently-observed visual field range can be simultaneously ascertained without using an electrically-driven stage or an encoder-equipped stage.

{Brief Description of Drawings}

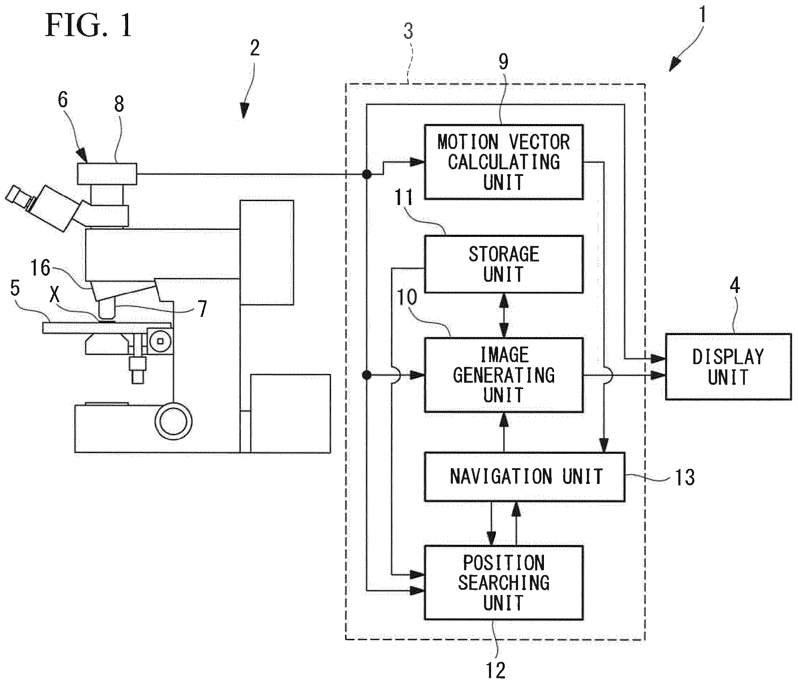

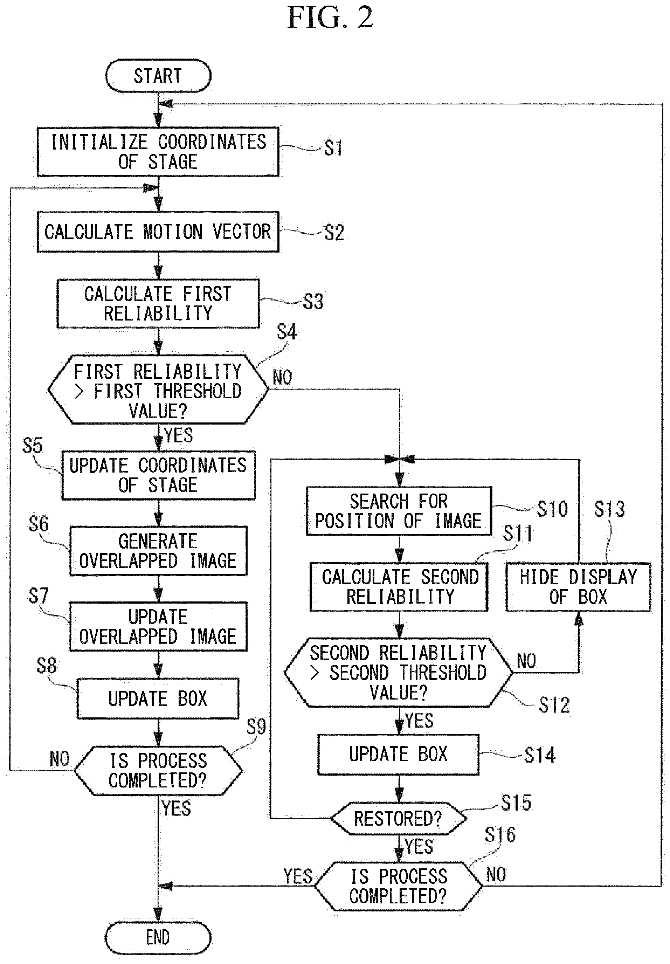

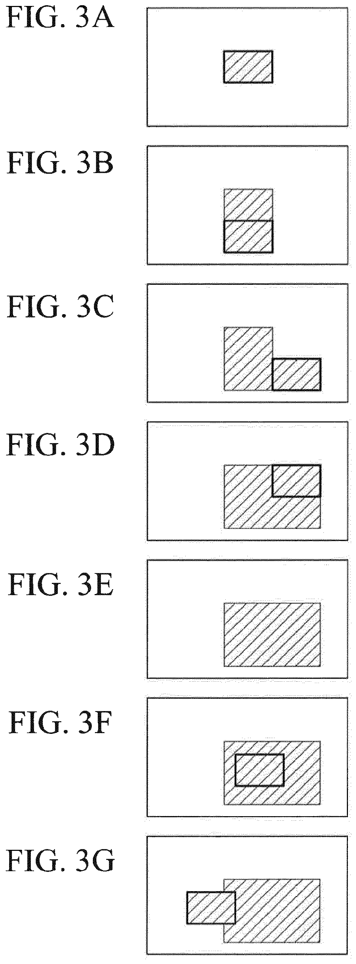

{Fig. 1} Fig. 1 is a block diagram illustrating a microscope imaging system according to an embodiment of the present invention.
{Fig. 2} Fig. 2 is a flowchart illustrating a process performed by the microscope imaging system in Fig. 1.
{Fig. 3A} Fig. 3A illustrates an example of an image updated in accordance with the process in Fig. 2.
{Fig. 3B} Fig. 3B illustrates an example of an image updated in accordance with the process in Fig. 2.
{Fig. 3C} Fig. 3C illustrates an example of an image updated in accordance with the process in Fig. 2.
{Fig. 3D} Fig. 3D illustrates an example of an image updated in accordance with the process in Fig. 2.

{Fig. 3E} Fig. 3E illustrates an example of an image updated in accordance with the process in Fig. 2.

{Fig. 3F} Fig. 3F illustrates an example of an image updated in accordance with the process in Fig. 2.

{Fig. 3G} Fig. 3G illustrates an example of an image updated in accordance with the process in Fig. 2.

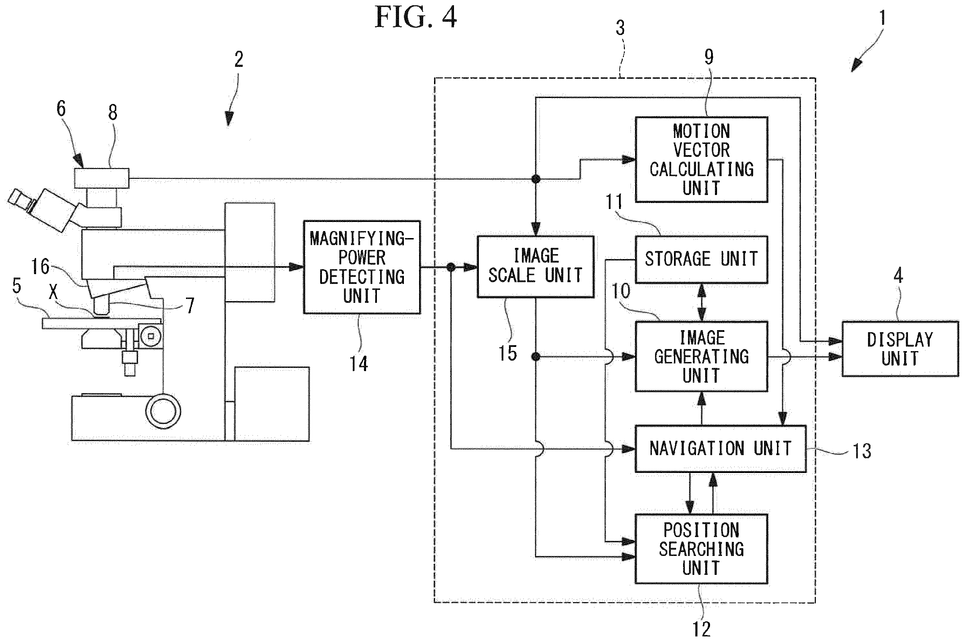

{Fig. 4} Fig. 4 is a block diagram illustrating a modification of the microscope imaging system in Fig. 1.

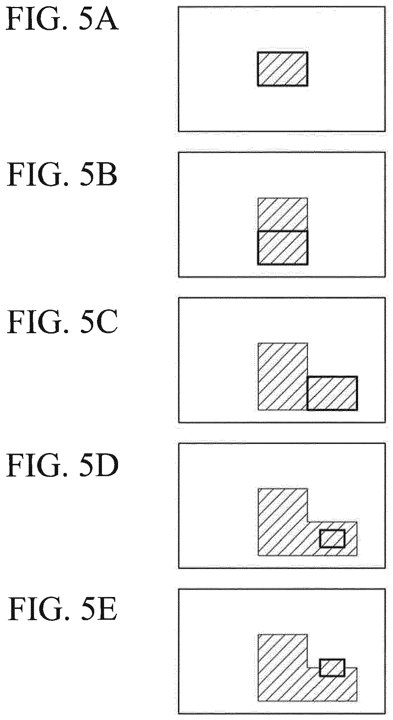

{Fig. 5A} Fig. 5A illustrates an example of an image updated in accordance with a process performed by the microscope imaging system in Fig. 4.

{Fig. 5B} Fig. 5B illustrates an example of an image updated in accordance with the process performed by the microscope imaging system in Fig. 4.

{Fig. 5C} Fig. 5C illustrates an example of an image updated in accordance with the process performed by the microscope imaging system in Fig. 4.

{Fig. 5D} Fig. 5D illustrates an example of an image updated in accordance with the process performed by the microscope imaging system in Fig. 4.

{Fig. 5E} Fig. 5E illustrates an example of an image updated in accordance with the process performed by the microscope imaging system in Fig. 4.

{Description of Embodiments}

A microscope imaging system 1 according to an embodiment of the present invention will be described below with reference to the drawings.

As shown in Fig. 1, the microscope imaging system 1 according to this embodiment includes a microscope 2, an image processing unit 3 that processes an image acquired by the microscope 2, and a display unit (e.g., a liquid crystal display) 4 that displays a composite image generated by the image processing unit 3 and a live image acquired by the microscope 2.

The microscope 2 includes a stage 5 capable of three-dimensionally moving a sample X placed thereon, an imaging unit 6 that acquires an image of the sample X placed on the stage 5, and an objective lens 7 an observation optical axis of which is disposed in the vertical direction.

The imaging unit 6 includes a camera 8 that acquires an image of light collected by the objective lens 7 from the sample X.

The camera 8 acquires a live image by acquiring images of the sample X at a predetermined frame rate and sends frame images constituting the live image to the image processing unit 3. A live image is a moving image constituted of a plurality of consecutive frame images for display.

The image processing unit 3 is a calculator using, for example, a general-purpose personal computer, a workstation, a built-in processor, a field programmable gate array (FPGA), a digital signal processor (DSP), or a general-purpose computing-on-graphics processing unit (GPGPU).

The image processing unit 3 includes: a motion vector calculating unit 9 that calculates a motion vector from the relative position between two consecutive frame images in the time-axis direction, among the images sent from the camera 8; an image generating unit 10 that generates an overlapped image by sequentially overlapping the images sent from the camera 8 and also generates a composite image by combining the display of the current position with the overlapped image; a storage unit 11 that stores the overlapped image; a position searching unit 12 that searches for the position of the last image sent from the camera 8 in the overlapped image; and a navigation unit (control unit) 13 that controls the position searching unit 12 and the image generating unit 10.

The motion vector calculating unit 9 calculates a motion vector extending from an image one frame before the last frame image to the last frame image by using a known technique, such as a phase-only correlation method based on spatial frequency or template matching, as typified by the sum-of-absolute difference (SAD) or normalized cross-correlation (NCC).

As an alternative to this embodiment in which the motion vector calculating unit 9 calculates a motion vector extending from one frame image before the last frame image to the last frame image, for example, the motion vector calculating unit 9 may temporarily store a plurality of frame images in a memory device in the image processing unit 3 and calculate a motion vector extending from an image four frames before to an image three frames before. In other words, the motion vector calculating unit 9 may calculate a motion vector extending between consecutive frames in the entire range of frames from the first frame to the last frame.

In addition to calculating a motion vector, the motion vector calculating unit 9 calculates the reliability of the calculated motion vector. As the reliability, for example, an NCC correlation coefficient or a peak value of the phase-only correlation method may be used. The calculated motion vector and the calculated reliability value are output to the navigation unit 13.

The image generating unit 10 generates a new overlapped image by overlapping the last frame image sent from the camera 8 with the overlapped image stored in the storage unit 11 in accordance with the motion vector calculated by the motion vector calculating unit 9. The generated new overlapped image is sent to the storage unit 11 so that the stored overlapped image is updated. The storage unit 11 is a freely-chosen storage device, such as a memory device, a hard disk drive (HDD), or a solid state drive (SSD).

Furthermore, the image generating unit 10 generates, for example, a rectangular box (rectangular in this embodiment) indicated by a bold line in Fig. 3A and displaying the current position of the stage 5 calculated by the navigation unit 13, which will be described later, generates a composite image by combining the generated box with the overlapped image, and outputs the composite image to the display unit 4.

Moreover, the image generating unit 10 controls execution and stoppage of the overlapped-image generating process and the composite-image combining process in accordance with a command from the navigation unit 13.

The position searching unit 12 searches for a position that matches the last frame image sent from the camera 8 in the overlapped image stored in the storage unit 11 by performing template matching. With regard to the template matching performed in the position searching unit 12, a known technique, such as SAD or NCC, is used, as in the motion vector calculating unit 9.

The position searching unit 12 performs a position searching process and also calculates the reliability of the detected position. As the reliability, for example, an NCC correlation value may be used.

The navigation unit 13 executes a cumulative navigation process and a search navigation process.

The cumulative navigation process involves stopping the process performed by the position searching unit 12 and causing the image generating unit 10 to operate. The search navigation process involves temporarily stopping the process performed by the image generating unit 10 and causing the position searching unit 12 to operate.

The cumulative navigation process involves calculating the current position of the stage 5, that is, the position of the visual field currently being imaged, by cumulatively adding motion vectors input from the motion vector calculating unit 9.

Because a motion vector calculated by the motion vector calculating unit 9 extends from one frame image before the last frame image to the last frame image, which are acquired at a predetermined frame rate and are consecutive in the time-axis direction, and thus indicates the moving direction and the moving distance, the movement path of the stage 5 can be sequentially determined by cumulatively adding motion vectors obtained with respect to all sequentially-acquired frame images.

The navigation unit 13 outputs the calculated current position of the stage 5 to the image generating unit 10, commands the image generating unit 10 to overlap the last frame image acquired by the camera 8 with the calculated current position of the stage 5 in the overlapped image stored in the storage unit 11 and also to generate a composite image in which a box indicating the current position of the stage 5 is combined with the overlapped image, and commands the image generating unit 10 to output the composite image to the display unit 4.

In the search navigation process, the position searching unit 12 reads the overlapped image stored in the storage unit 11, searches for a position of an image in the overlapped image that matches the last frame image sent from the camera 8, and outputs the detected position in the overlapped image as the current position of the stage 5 to the navigation unit 13.

The navigation unit 13 switches between the cumulative navigation process and the search navigation process on the basis of the reliability values output from the motion vector calculating unit 9 and the position searching unit 12. Specifically, if the first reliability value output from the motion vector calculating unit 9 exceeds a first threshold value, the navigation unit 13 executes the cumulative navigation process. If the first reliability value is smaller than or equal to the first threshold value, the navigation unit 13 executes the search navigation process.

If the second reliability value output from the position searching unit 12 exceeds a second threshold value, the navigation unit 13 stops the search navigation process and switches to the cumulative navigation process. If the second reliability value is smaller than or equal to the second threshold value, the navigation unit 13 continues with the search navigation process.

The operation of the microscope imaging system 1 according to this embodiment having the above-described configuration will be described below.

In order to observe the sample X in accordance with this embodiment, the sample X is placed on the stage 5, the stage 5 is manually operated to move the sample X to a position where the observation optical axis is aligned with a part of the sample X, and an imaging process is started by using the camera 8.

When the imaging process using the camera 8 commences, the camera 8 continuously acquires a live image at a predetermined frame rate, and the live image is continuously displayed on the display unit 4.

As shown in Fig. 2, when a start command for acquiring an overlapped image is made, the coordinates of the current position of the stage 5 are initialized, and the image generating unit 10 overlaps the first frame image sent from the camera 8 with the initialized coordinates of the current position so as to generate a first overlapped image (step S1). In this case, the generated overlapped image is sent to and stored in the storage unit 11. Moreover, a composite image is generated by combining the overlapped image generated by the image generating unit 10 with a box indicating the current position of the stage 5 and is output to the display unit 4 so as to be displayed thereon, as shown in Fig. 3A.

When the user operates the microscope 2 to move the stage 5 in the horizontal direction, the sample image on the image sent from the camera 8 also moves. The image sent from the camera 8 is input to the motion vector calculating unit 9. The motion vector calculating unit 9 calculates a motion vector indicating the moving direction and the moving distance from an image one frame before (step S2), calculates a first reliability value indicating the reliability of the motion vector (step S3), and outputs the motion vector and the first reliability value to the navigation unit 13.

The navigation unit 13 determines whether or not the first reliability value sent from the motion vector calculating unit 9 exceeds the first threshold value (step S4). If the first reliability value exceeds the first threshold value, the navigation unit 13 determines that the calculation result of the motion vector is reliable and executes the cumulative navigation process. In the cumulative navigation process, the motion vector calculated by the motion vector calculating unit 9 is cumulatively added to the coordinates of the latest current position so as to update the coordinates of the current position of the stage 5 (step S5). The navigation unit 13 sends the updated current position of the stage 5 to the image generating unit 10 and also commands the image generating unit 10 to execute an image overlapping process.

The image generating unit 10 reads the overlapped image stored in the storage unit 11, overlaps the last frame image sent from the camera 8 with the coordinates of the current position input from the navigation unit 13 so as to generate a new overlapped image (step S6), and sends the generated overlapped image to the storage unit 11 so as to update the overlapped image (step S7). Furthermore, the image generating unit 10 generates a composite image by combining the generated overlapped image with a box indicating the current position sent from the navigation unit 13 (step S8). The generated composite image is output to the display unit 4 so as to be displayed thereon, as shown in Fig. 3B. Then, it is determined whether or not the process is completed (step S9). If not completed, the process from step S2 is repeated.

The process from step S2 to step S8 is the cumulative navigation process and is executed for each frame image sent from the camera 8 so that the composite image displayed on the display unit 4 is sequentially updated in accordance with an operation performed on the stage 5 by the user, as shown in Figs. 3C and 3D.

For example, if the first reliability value of the motion vector calculated by the motion vector calculating unit 9 becomes smaller than or equal to the first threshold value as a result of the user rapidly moving the stage 5 when the composite image displayed on the display unit 4 is in the state shown in Fig. 3D, the navigation unit 13 determines in step S4 that the calculation result of the motion vector is not reliable and executes the search navigation process.

In the search navigation process, the navigation unit 13 commands the image generating unit 10 to temporarily stop the process and the position searching unit 12 to commence a process. Thus, new overlapped images are not generated.

The position searching unit 12 reads the overlapped image stored in the storage unit 11, searches for a position in the overlapped image that matches the last frame image sent from the camera 8 (step S10), and calculates a second reliability value indicating the reliability of the search result (step S11). The navigation unit 13 determines whether or not the second reliability value calculated by the position searching unit 12 exceeds the second threshold value (step S12). If the second reliability value is smaller than or equal to the second threshold value, the navigation unit 13 determines that the search result is not reliable and causes the image generating unit 10 to output an overlapped image not combined with a box indicating the current position, as shown in Fig. 3E, so as not to display a box and to inform the user that the position searching process is unsuccessful (step S13). Then, the process from step S10 is repeated.

If the second reliability value calculated by the position searching unit 12 exceeds the second threshold value in step S12, the navigation unit 13 determines that the search result is reliable, sends the position of the image detected by the position searching unit 12 as the current position of the stage 5 to the image generating unit 10, and causes the image generating unit 10 to resume the process (step S14).

The process from step S10 to step S14 is the search navigation process. When the search navigation process is successful, the overlapped image and the box are displayed on the display unit 4, and the position of the box is updated in accordance with the position search result. If the position searching process is unsuccessful, the box is not displayed.

The navigation unit 13 determines in step S15 whether or not the position searching process by the position searching unit 12 has been successful successively for a predetermined number of times (step S15), and determines that the restoration is successful if the position searching process has been successful. If it is determined that the restoration is not successful, the process from step S10 is repeated.

If it is determined that the restoration is successful, it is determined whether or not the process is completed (step S16). If it is determined that the process is not completed, the process from step S1 for initializing the position of the image detected by the position searching unit 12 as the initial coordinates of the stage 5 is repeated. As a result, a composite image constituted of an overlapped image and a box is updated in accordance with an operation performed on the stage 5 by the user, as shown in Figs. 3F and 3G.

Accordingly, the microscope imaging system 1 according to this embodiment is advantageous in that, since the current position of the stage 5 is calculated in accordance with an acquired image, a special device for detecting the current position of the stage 5, as in an electrically-driven stage or an encoder-equipped stage, is not necessary, thereby achieving a compact and low-cost configuration. It is also advantageous in that, with an overlapped image constituted of a plurality of images overlapped with each other, a relatively wider range of the sample X can be observed and the entire sample X can be observed without being overlooked since the position currently being imaged by the camera 8 is displayed in a box.

In this embodiment, when the objective lens 7 disposed in the observation optical axis of the microscope 2 is to be switched to another one, a magnifying-power detecting unit (magnifying-power acquiring unit) 14 that detects the magnifying power of the objective lens 7 and an image scale unit 15 that adjusts the size of an image sent from the camera 8 on the basis of the magnifying power of the objective lens 7 may be provided, as shown in Fig. 4.

For example, the magnifying-power detecting unit 14 is an encoder provided in a revolver 16 used for replacing the objective lens 7. The magnifying-power detecting unit 14 calculates the ratio (scale) between the magnifying power Ms of the objective lens 7 when commencing an imaging process of an overlapped image and the current magnifying power Mc of the objective lens 7 in accordance with the following expression:

$$k = Ms/Mc$$

The image scale unit 15 uses a scale k sent from the magnifying-power detecting unit 14 to adjust the size of an image sent from the camera 8 to the scale k. In this image-size adjusting process, a common interpolation method, such as a bilinear or bicubic method, may be used.

By using the scale k output from the magnifying-power detecting unit 14, the navigation unit 13 calculates the current position of the stage 5 by cumulatively adding a value obtained by multiplying the motion vector calculated by the motion vector calculating unit 9 by the scale k. Moreover, the size of the box to be combined with the overlapped image is also changed by being multiplied by the scale k.

The operation performed in a case where the objective lens 7 is changed while an overlapped image is being generated in the microscope imaging system 1 having this configuration will now be described.

In the initial state, the objective lens 7 disposed in the observation optical axis has an optical magnifying power Ms of 10×.

When the navigation unit 13 commences a navigation process, the magnifying-power detecting unit 14 stores the magnifying power Ms, and the scale k becomes equal to 1.

In this case, the image scale unit 15 sends an image sent from the camera 8 directly to the image generating unit 10 and the position searching unit 12 without changing the size of the image, and a process similar to that described above is performed, as shown in Figs. 5A to 5C.

In a case where the user changes the objective lens 7 to another one having an optical magnifying power Mc of 20× in Fig. 5C, the scale k becomes equal to 0.5. Thus, as shown in Fig. 5D, the image scale unit 15 reduces the size of the image sent from the camera 8 to 1/2 and sends the image to the image generating unit 10, and the navigation unit 13 reduces the size of the motion vector sent from the motion vector calculating unit 9 to 1/2 and updates the current position of the stage 5. Thus, even after the optical magnifying power of the objective lens 7 is switched from 10× to 20×, the overlapped image is updated in accordance with the image having the reduced size, and a box indicating the current position of the stage 5 is displayed in accordance with the box having the reduced size, as shown in Fig. 5E.

In the search navigation process, an image whose size is adjusted by the image scale unit 15 in accordance with the magnifying power of the objective lens 7 is input to the position searching unit 12 so that it is possible to search for a position that matches the image acquired by the camera 8 in the overlapped image stored in the storage unit 11.

In a case where the objective lens 7 is switched to another one, there is a possibility of displacement in the position of the stage 5 in the overlapped image due to a deviation between the centers of the objective lenses 7. In this case, the navigation unit 13 may cause the position searching unit 12 to execute a searching process at the timing at which the objective lens 7 is switched to another one so as to temporarily execute the search navigation process, thereby determining the current position of the stage 5 after the objective lens 7 is switched to another one.

The switching of the magnifying power of the objective lens 7 is described above as an example of changing of the optical magnifying power of the imaging unit 6. Alternatively, in a case where the optical magnifying power is to be changed by, for example, another optical unit, such as an intermediate variable magnifying power device, the process can be similarly performed by using the magnifying-power detecting unit 14 to detect the magnifying power.

Moreover, although the magnifying-power detecting unit 14 that detects the magnifying power is described as an example of a magnifying-power acquiring unit, an input unit to which the user inputs the magnifying power may be used as an alternative.

Furthermore, although the current position of the stage 5 is displayed by using a rectangular box indicating the visual field, the current position of the stage 5 may alternatively be displayed by using a freely-chosen method, such as using an arrow.

{Reference Signs List}

1 microscope imaging system
5 stage
6 imaging unit
9 motion vector calculating unit
10 image generating unit
12 position searching unit
13 navigation unit (control unit)
14 magnifying-power detecting unit (magnifying-power acquiring unit)
15 image scale unit
X sample

## Claims

1. A microscope imaging system comprising:

   a stage on which a sample is placed and that is movable in a direction intersecting an observation optical axis;
   an imaging unit that acquires an image of the sample placed on the stage at time intervals;
   a motion vector calculating unit that calculates a motion vector between two images acquired by the imaging unit; and
   an image generating unit that generates an overlapped image by overlapping the image acquired by the imaging unit with a current position where the motion vector is cumulatively added, and that also generates a composite image by combining display of the current position with the overlapped image.

2. The microscope imaging system according to Claim 1,
   wherein the motion vector calculating unit calculates a reliability of the calculated motion vector,
   wherein the microscope imaging system further comprises a control unit that controls the image generating unit to generate the overlapped image and the composite image if the calculated reliability exceeds a predetermined threshold value.

3. The microscope imaging system according to Claim 2, further comprising:

   a position searching unit that searches for a position of the image acquired by the imaging unit in the overlapped image generated by the image generating unit,
   wherein if the calculated reliability of the motion vector is smaller than or equal to the threshold value, the control unit stops the generating processes of the overlapped image and the composite image and causes the position searching unit to start searching, and wherein when the position of the image is detected by the position searching unit, the control unit controls the image generating unit to resume the generating processes of the overlapped image and the composite image using the detected position of the image as the current position.

4. The microscope imaging system according to Claim 3,
   wherein the position searching unit calculates a reliability of the detected position of the image, and
   wherein if the calculated reliability exceeds a predetermined threshold value, the control unit controls the image generating unit to resume the generating processes of the overlapped image and the composite image using the detected position of the image as the current position.

5. The microscope imaging system according to any one of Claims 1 to 4, further comprising:

   a magnifying-power acquiring unit that acquires an optical magnifying power on the observation optical axis; and
   an image scale unit that adjusts a size of the image acquired by the imaging unit in accordance with the optical magnifying power acquired by the magnifying-power acquiring unit,
   wherein the image generating unit generates the overlapped image and the composite image by using the image adjusted by the image scale unit.

6. The microscope imaging system according to Claim 3 or 4, further comprising:

   a magnifying-power acquiring unit that acquires an optical magnifying power on the observation optical axis; and
   an image scale unit that adjusts a size of the image acquired by the imaging unit in accordance with the optical magnifying power acquired by the magnifying-power acquiring unit,
   wherein the position searching unit searches for the position by using the image adjusted by the image scale unit.

FIG. 1

# FIG. 2

```
                    ┌──────────┐
                    │  START   │
                    └────┬─────┘
                         │
              ┌──────────▼──────────┐
              │ INITIALIZE COORDINATES ├── S1
              │      OF STAGE        │
              └──────────┬──────────┘
                         │
              ┌──────────▼──────────┐
              │ CALCULATE MOTION VECTOR ├── S2
              └──────────┬──────────┘
                         │
              ┌──────────▼──────────┐
              │   CALCULATE FIRST    ├── S3
              │    RELIABILITY       │
              └──────────┬──────────┘
                         │
                        S4
              ╱─────────────────────╲
             ╱   FIRST RELIABILITY    ╲  NO
             ╲   > FIRST THRESHOLD     ╱────────────┐
              ╲       VALUE?          ╱             │
               ╲─────────┬──────────╱              │
                         │ YES                      │
     S5       ┌──────────▼──────────┐              │
      └───────│ UPDATE COORDINATES  │              │
              │      OF STAGE        │              │
              └──────────┬──────────┘   ┌──────────▼──────────┐   ┌──────────────┐
     S6       ┌──────────▼──────────┐   │    SEARCH FOR       ├── S10   S13
      └───────│     GENERATE        │   │ POSITION OF IMAGE   │        │
              │  OVERLAPPED IMAGE   │   └──────────┬──────────┘        │
              └──────────┬──────────┘   ┌──────────▼──────────┐ S11 ┌──▼───────────┐
     S7       ┌──────────▼──────────┐   │ CALCULATE SECOND    ├──   │ HIDE DISPLAY │
      └───────│     UPDATE          │   │    RELIABILITY      │     │   OF BOX     │
              │  OVERLAPPED IMAGE   │   └──────────┬──────────┘     └──▲───────────┘
              └──────────┬──────────┘   ╱─────────────────────╲        │
     S8       ┌──────────▼──────────┐  ╱ SECOND RELIABILITY    ╲ NO    │
      └───────│    UPDATE BOX       │  ╲ > SECOND THRESHOLD     ╱───────┘
              └──────────┬──────────┘   ╲     VALUE?           ╱
                        S9    ╲─────────┴──────────╱ S12
              ╱─────────────────────╲       │ YES
     NO      ╱   IS PROCESS          ╲   ┌───▼──────────────┐
     ┌───────╲   COMPLETED?          ╱   │   UPDATE BOX     ├── S14
     │        ╲─────────┬──────────╱    └────────┬─────────┘
     │                  │ YES              ╱──────────────╲  S15
     │                  │                 ╲   RESTORED?    ╱──
     │                  │                  ╲──────┬───────╱
     │                  │                         │ YES        S16
     │                  │              ╱─────────────────────╲
     │                  │        YES  ╱   IS PROCESS          ╲ NO
     │                  │      ┌──────╲   COMPLETED?          ╱───┐
     │            ┌─────▼──────▼──┐    ╲─────────────────────╱    │
     │            │     END        │                              │
     │            └───────────────┘                              │
```

EP 3 299 862 A1

FIG. 3A

FIG. 3B

FIG. 3C

FIG. 3D

FIG. 3E

FIG. 3F

FIG. 3G

11

FIG. 4

FIG. 5A

FIG. 5B

FIG. 5C

FIG. 5D

FIG. 5E

Europäisches
Patentamt

European
Patent Office

Office européen
des brevets

## EUROPEAN SEARCH REPORT

Application Number

EP 17 16 8330

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/026038 A1 (VIEWSIQ INC [CA]) 25 February 2016 (2016-02-25) * paragraph [0020] - paragraph [0022] * * paragraph [0026] * * paragraph [0029] * * paragraph [0031] - paragraph [0032] * * figures 3-5 * * claim 2 * | 1-6 | INV. G02B21/36 G06T3/40 G06T7/20 G06T11/60 H04N5/232 G06K9/20 |
| X A | US 8 451 335 B2 (KANG WOOBUM [JP]; KEYENCE CO LTD [JP]) 28 May 2013 (2013-05-28) * figure 1 * * column 1, line 51 - line 52 * * column 2, line 1 - line 3 * * column 19, line 35 - line 36 * * column 19, line 41 * | 1-4 5,6 | |
| X A | US 2013/063585 A1 (WATANABE HIROFUMI [JP] ET AL) 14 March 2013 (2013-03-14) * figure 2 * * paragraph [0007] * * paragraph [0009] - paragraph [0010] * | 1-3 4-6 | |

TECHNICAL FIELDS
SEARCHED       (IPC)

G02B
G06T
H04N
G06K

The present search report has been drawn up for all claims

| Place of search | Date of completion of the search | Examiner |
|---|---|---|
| Munich | 16 October 2017 | Gentile, Mathieu |

EPO FORM 1503 03.82 (P04C01)

## ANNEX TO THE EUROPEAN SEARCH REPORT
## ON EUROPEAN PATENT APPLICATION NO.

EP 17 16 8330

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2017

| Patent document cited in search report | | | Publication date | Patent family member(s) | | | Publication date |
|---|---|---|---|---|---|---|---|
| WO 2016026038 | A1 | | 25-02-2016 | CN | 107076980 | A | 18-08-2017 |
| | | | | EP | 3183612 | A1 | 28-06-2017 |
| | | | | JP | 2017526011 | A | 07-09-2017 |
| | | | | US | 2017242235 | A1 | 24-08-2017 |
| | | | | WO | 2016026038 | A1 | 25-02-2016 |
| US 8451335 | B2 | | 28-05-2013 | CN | 101750726 | A | 23-06-2010 |
| | | | | DE | 102009057885 | A1 | 15-07-2010 |
| | | | | JP | 5096303 | B2 | 12-12-2012 |
| | | | | JP | 2010141699 | A | 24-06-2010 |
| | | | | US | 2010149362 | A1 | 17-06-2010 |
| US 2013063585 | A1 | | 14-03-2013 | JP | 2013058124 | A | 28-03-2013 |
| | | | | US | 2013063585 | A1 | 14-03-2013 |

EPO FORM P0459

For more details about this annex : see Official Journal of the European Patent Office, No. 12/82

**EP 3 299 862 A1**

## REFERENCES CITED IN THE DESCRIPTION

### Patent documents cited in the description

- JP 2009014939 A
- JP 2010134374 A